(19) Europäisches Patentamt / European Patent Office / Office européen des brevets

(11) **EP 2 728 722 A2**

(12) **EUROPEAN PATENT APPLICATION**

(43) Date of publication:
07.05.2014 Bulletin 2014/19

(51) Int Cl.:
*H02M 1/00* (2007.01)

(21) Application number: 13181750.4

(22) Date of filing: 27.08.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 14.09.2012 JP 2012202195

(71) Applicant: Hitachi Ltd.
Tokyo 100-8280 (JP)

(72) Inventors:
• Inoue, Shigenori
Tokyo 100-8220 (JP)
• Katoh, Shuji
Tokyo 100-8220 (JP)

• Bando, Akira
Tokyo 100-8220 (JP)
• Kiyofuji, Yasuhiro
Tokyo 100-8220 (JP)
• Eguchi, Yoshio
Tokyo 100-8220 (JP)
• Ichinose, Masaya
Tokyo 100-8220 (JP)
• Yamamoto, Takayoshi
Tokyo 100-8220 (JP)

(74) Representative: MERH-IP
Matias Erny Reichl Hoffmann
Paul-Heyse-Strasse 29
80336 München (DE)

(54) **Power conversion apparatus and control method thereof**

(57) In the present invention, provided is a power conversion apparatus (102) in which at least one energy storage element and at least one switching element are included, a plurality of series circuits of a transformer winding and an arm (104U, 104V, 104W) in which one or a plurality of at least two-terminal unit converters (105) which depend on ON/OFF of the switching element and supply a zero voltage or a voltage depending on a voltage of the energy storage element are connected in series are connected in parallel, and a multi-phase power source or a multi-phase load is connected to another winding of the transformer (103), and the parallel-connection point is set as a DC terminal, and which includes means (106) for controlling a current flowing through each of the arms (104U, 104V, 104W) to have a phase and amplitude different from each other.

FIG.1

EP 2 728 722 A2

**Description**

BACKGROUND OF THE INVENTION

The present invention relates to a power conversion apparatus and a control method thereof. More particularly, the present invention relates to a power conversion apparatus which includes an arm configured by connecting one or a plurality of unit converters in series and which is suitable to convert AC power into DC power or antily, and a control method thereof.

In recent years, a number of power conversion apparatus which convert AC into DC or DC into AC are used. A power conversion apparatus which uses unit converters is known as this kind of power conversion apparatus. For example, when a plurality of unit converters are connected in series, a power conversion apparatus which withstands a high voltage is relatively easily obtained. A unit converter has an energy storage element such as a capacitor, and supplies a voltage of the energy storage element to an output terminal by operating a semiconductor switching element.

This kind of power conversion apparatus is configured by connecting in parallel a unit in which one or a plurality of unit converters are connected in series so as to perform power conversion between DC and AC as an apparatus treating a plurality of phases.

In a circuit configuration of a unit converter, a power semiconductor device controllable to be on/off such as an IGBT (Insulated-Gate Bipolar Transistor), a GTO (Gate Turn-Off Thyristor), and a GCT (Gate-Commutated Thyristor) is generally used as a switching element.

As the above-described example, some power conversion apparatus are configured by connecting a secondary winding of a transformer in series to a plurality of unit converters so as to cooperate with a three-phase power system therethrough. Specifically, the secondary winding of the transformer is made to be open winding and one ends of series circuits of respective unit converters are star-connected. The above-described technology is disclosed in, for example, JP-A-2010-233411.

In the above-described technology, a magnetomotive force through a zero-phase-sequence current is canceled as one characteristic at the time of power conversion. In this way, in this specification, a converter which can cancel a magnetomotive force through a zero-phase-sequence current is referred to as a ZC-MMC (Zero-Sequence Cancelling Modular Multilevel Converter).

SUMMARY OF THE INVENTION

In the above-described conventional technology, an energy storage value for an energy storage element needs to be controlled. When an energy storage element will be described by using as an example a capacitor, an energy storage value needs to be controlled to a predetermined voltage for performing a normal operation.

In a unit in which one or a plurality of unit converters are connected in series (hereinafter, referred to as an arm), when a capacitor voltage of each unit converter is uneven, a voltage balance of the entire arm is broken. For example, descriptions will be made by using the fact that the total sum of capacitor voltages of arms is controlled in a tolerance level. In unevenness of the capacitor voltages of each unit converter, when a zero-phase voltage is superimposed on an output voltage command value of each arm, different active power is intentionally generated in each arm. As a result, among arms, a method for balancing a capacitor voltage average value in each arm is considered (in the specification, this method for arm balance control is referred to as a zero-phase-sequence voltage superimposition method).

However, there is a problem that when a zero-phase sequence voltage is superimposed on an output voltage command value of each arm against unevenness of capacitor voltages in each unit converter, the superimposed zero-phase sequence voltage appears on a DC side terminal.

In particular, for example, two DC terminals are mutually connected and an operation is performed as a frequency converter (FC), a high-voltage direct current (HVDC) system, and a back-to-back (BTB) system. In this case, one zero-phase sequence voltage through arm balance control of a ZC-MMC appears on a common DC terminal and interferes with the other control.

It is an object of the present invention to provide a power conversion apparatus which can withstand unevenness of capacitor voltages while preventing a superimposed voltage from appearing on a DC side terminal, and a control method thereof.

In order to achieve the above object, in the present invention, a power conversion apparatus to connect arms and windings in series on a predetermined order side of a transformer to configure a serial circuit, connect the serial circuits in parallel to configure connection parts as DC terminals, connect one or a plurality of unit converters in series to configure the arms, and/or connect a plurality of phase power sources or phase loads to winding on another order side of the transformer, the unit converter being configured as an at least two-terminal converter by including the at least one energy storage element and the at least one switching element controlling an output depending on a voltage of the energy storage element, wherein the power conversion apparatus controls imbalance of storage energy or voltage of the energy storage element so that a current flowing through each of the arms has a phase and amplitude different from each other to be approximated to balance.

A power conversion apparatus to connect a plurality of arms in parallel, mutually connect some arms of a plurality of the parallel-connection arms to be formed as a first DC side, mutually connect other arms of a plurality of the parallel-connection arms to be formed as a second DC side, connect one or a plurality of unit converters in series to configure each of the plurality of arms, configure a winding provided between the first DC side and the second DC side or a winding connected to a terminal provided between the first DC side and the second DC side as a winding on a predetermined order side of a transformer, and/or electrically connect a winding on the predetermined order side to a winding on another order side, the power conversion apparatus includes at least one energy storage element; and/or at least one switching element, the unit converter including the at least one energy storage element and/or the at least one switching element for outputting a voltage depending on a voltage of the energy storage element, wherein the power conversion apparatus controls a current flowing through each of the arms to have a phase and amplitude different from each other and approximate imbalance of a voltage or storage energy of the energy storage element to balance.

Specifically, in the power conversion apparatus in which at least one energy storage element and at least one switching element are included, a plurality of series circuits of a transformer winding and an arm in which one or a plurality of at least two-terminal unit converters which depend on ON/OFF of the switching element and supply a zero voltage or a voltage depending on a voltage of the energy storage element are connected in series are connected in parallel, and a multi-phase power source or a multi-phase load is connected to another winding of the transformer, and the parallel-connection point is set as a DC terminal, the power conversion apparatus includes means for controlling a current flowing through each of the arms to have a phase and amplitude different from each other so that each of the arms may give and receive different active power.

Further, an FC, an HVDC system, or a BTB system in which at least one power conversion apparatus described above is provided and at least another power conversion apparatus is connected directly or through a DC transmission line to a DC terminal of the power conversion apparatus is provided.

According to the present invention, the power conversion apparatus can bring a balance against unevenness of a capacitor voltage while preventing a superimposed voltage for a balance from appearing on a DC terminal. More specifically, an effect that energy or a voltage of the energy storage device can be balanced or an arbitrary imbalance can be generated without causing one power conversion apparatus to interfere with control of another power conversion apparatus is obtained in an FC, an HVDC system, or a BTB system.

Other objects, features and advantages of the invention will become apparent from the following description of the embodiments of the invention taken in conjunction with the accompanying drawings.

BRIEF DESCRIPTION OF THE DRAWINGS

FIG. 1 illustrates a power conversion apparatus according to first and second embodiments of the present invention;
FIG. 2 illustrates a configuration of a unit converter in a bidirectional chopper circuit system;
FIG. 3 illustrates a configuration of a unit converter in a full-bridge circuit system;
FIG. 4 illustrates one example of a control block diagram of the power conversion apparatus according to the present invention;
FIG. 5 illustrates one example of an arm balance control block diagram of the power conversion apparatus according to the present invention;
FIG. 6 illustrates a gate signal generating unit of a control block of the power conversion apparatus according to the present invention;
FIG. 7 illustrates a conceptual waveform of the power conversion apparatus according to the present invention;
FIG. 8 illustrates a configuration example of a transformer of the power conversion apparatus according to the first and second embodiments of the present invention;
FIG. 9 illustrates a power conversion apparatus according to a third embodiment of the present invention; and
FIG. 10 illustrates a configuration example of a transformer of the power conversion apparatus according to the third embodiment of the present invention.

DESCRIPTION OF THE EMBODIMENTS

[First Embodiment]

A first embodiment of the present invention will be described below with reference to the accompanying drawings of the embodiment.

The present invention has a configuration in which in a power conversion apparatus in which a bidirectional chopper circuit is used as a unit converter, three circuits in which three arms in which a plurality of the bidirectional chopper circuits are connected in series and three secondary windings of a transformer are connected in series, respectively, are connected in parallel, one terminal of the parallel connection point is set as a DC positive side terminal, the other terminal thereof is set as a DC negative side terminal, and a primary winding of the transformer is connected to a three-phase power system, when a negative-phase-sequence current flows through the arm according to a difference of an average value for each arm of a voltage in the capacitor, a control means for having a function of balancing an average value for each arm of a voltage in the capacitor is included.

Further, the present embodiment has a configuration of an FC (frequency converter), an HVDC (High-Voltage Direct Current) system, or a BTB (Back-To-Back) system in which DC terminals of two power conversion apparatus described above are mutually connected, or one DC terminal of one power conversion apparatus described above and another DC terminal of one power conversion apparatus in another system are mutually connected.

According to the present embodiment, an effect that the one power conversion apparatus can balance an average value in each arm of voltage in the capacitor without interfering with control of the other power conversion apparatus is obtained.

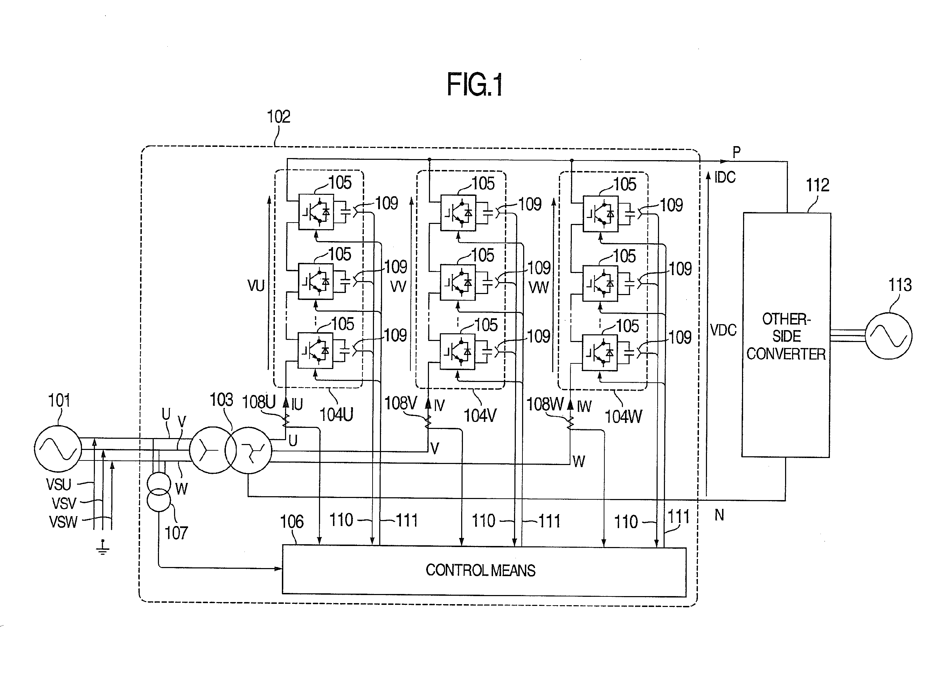

First, the entire configuration of the first embodiment will be described with reference to FIG. 1.

The power conversion apparatus 102 is connected to the three-phase power system 101 via the transformer 103. A configuration of the transformer 103 will be described later. AU-phase arm 104U, a V-phase arm 104V, and a W-phase arm 104W are connected in series to respective phases (points u, v, and w) of secondary windings of the transformer 103. Further, the other ends of respective arms 104U, 104V, and 104W are connected to a DC positive side terminal (point P). In addition, a neutral point of the secondary winding of the transformer is connected to a DC negative side terminal (point N).

That is, circuits in which the secondary windings (802) of the transformer and the respective arms 104U, 104V, and 104W are connected in series with each other are connected in parallel at points P and N.

An other-side power conversion apparatus 112 is connected directly or via a DC transmission line (not illustrated) to the DC positive side terminal (point P) and the DC negative side terminal (point N). Further, the other-side power conversion apparatus 112 is connected to another three-phase AC system 113. Here, the other-side power conversion apparatus 112 may have the same configuration as or a configuration different from that of the power conversion apparatus 102.

Each of the arms 104U, 104V, and 104W is a circuit in which a plurality of unit converters 105 are connected in series to each other. An internal configuration of the unit converter 105 will be described later.

Hereinafter, voltages and currents illustrated in FIG. 1 are defined.

A U-phase phase voltage, a V-phase phase voltage, and a W-phase phase voltage of the three-phase power system 101 are referred to as VSU, VSV, and VSW, respectively.

Further, a current which flows through a point u of the transformer 103 and the U-phase arm 104U is referred to as IU, a current which flows through a point v of the transformer 103 and the V-phase arm 104V is referred to as IV, and a current which flows through a point w of the transformer 103 and the W-phase arm 104W is referred to as IW.

Further, the sum of output voltages produced from one or the plurality of unit converters 105 included in the U-phase arm 104U is referred to as an output voltage VU of the U-phase arm 104U. Similarly, the sum of output voltages produced from one or the plurality of unit converters 105 included in the V-phase arm 104V is referred to as an output voltage VV of the V-phase arm 104V, and the sum of output voltages produced from one or the plurality of unit converters 105 included in the W-phase arm 104W is referred to as an output voltage VW of the W-phase arm 104W.

A direct-current voltage between the DC positive side terminal (point P) and the DC negative side terminal (point N) is referred to as a VDC. Further, a direct current which flows from the power conversion apparatus 102 to the DC positive side terminal (point P) of the other-side power conversion apparatus 112 is referred to as an IDC.

Further, a capacitor voltage of each unit converter 105 is referred to as VCjk. Here, j represents the arm 104U, 104V, or 104W to which the unit converter belongs, for example, j=U, V, or W. Further, k represents a number in the arm 104U, 104V, or 104W, for example, k=1, 2, ..., Nc. Here, Nc represents the number of the unit converters 105 included in the arm 104U, 104V, or 104W.

Next, a voltage detecting means, a current detecting means, and a control means illustrated in FIG. 1 will be described.

The voltage detecting means 107 detects the phase voltages VSU, VSV, and VSW of the three-phase power system 101, and transmits them to the control means 106. Note that in the present embodiment, a case where the voltage detecting means 107 detects a phase voltage will be described, and further the voltage detecting means 107 may detect a line voltage.

The current detecting means 108U, 108V, and 108W detect currents IU, IV, and IW which flow through each of the arms 104U, 104V, and 104W, and transmit them to the control means 106.

The voltage detecting means 109 detects a voltage of a capacitor (203 and/or 301) provided on each unit converter 105, and transmits it to the control means 106 via a capacitor voltage detection line 110.

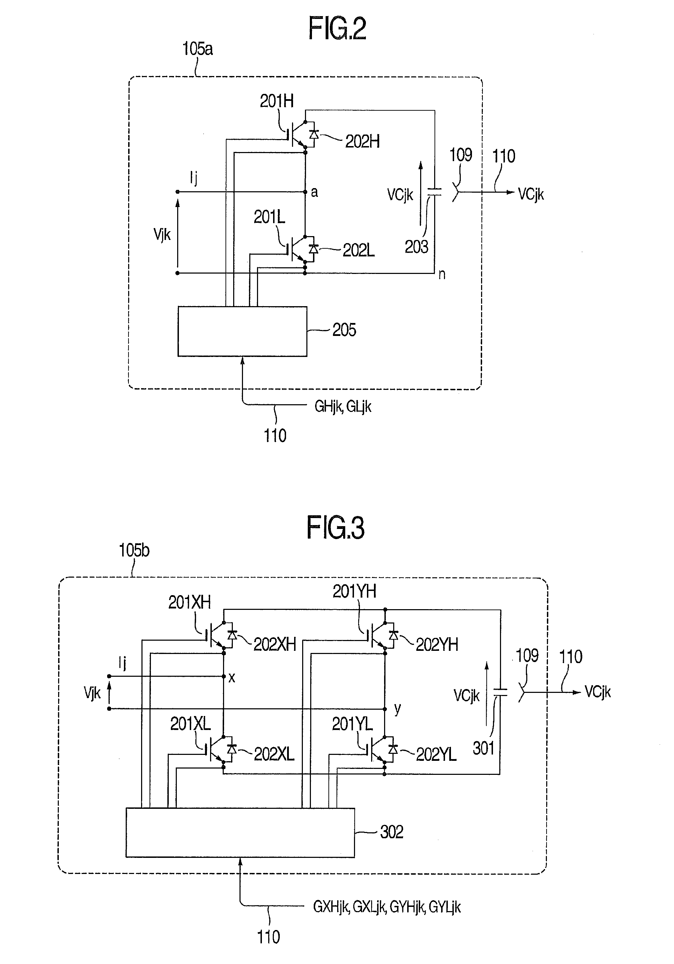

The control means 106 generates gate signals given to switching elements 201H and 201L, and/or 201XH, 201XL, 201YH, and 201YL of each unit converter 105 (FIGS. 2 and 3), and transmits them through gate signal transmission lines 111 by using the voltages VSU, VSV, and VSW obtained from the voltage detecting means 107, the currents IU, IV, and IW obtained from the current detecting means 108U, 108V, and 108W, and the capacitor voltage VCjk of each unit converter 105 obtained from the voltage detecting means 109.

Here, the control means 106 is illustrated as one rectangle in FIG. 1. The control means 106 can be divided into a plurality of components and the plurality of components can be installed in places physically separated from each other or potentials electrically different from each other. The present embodiment is supposed to include the above case.

Further, FIG. 1 illustrates a case where the control means 106 detects the VSU, VSV, VSW, IU, IV, and IW, and the capacitor voltage VCjk of each unit converter 105 by using the voltage detecting means 107, the current detecting means 108U, 108V, and 108W, and the voltage detecting means 109. Further, the control means 106 can detect other electric amounts such as VDC and IDC, and the present embodiment is supposed to include the above case.

One example of an internal configuration of the unit converter 105 will be described below with reference to FIG. 2. As the unit converter 105, a unit converter 105a in a bidirectional chopper circuit system capable of producing a unipolar voltage and a unit converter 105b in a full-bridge circuit system can be used. First, a circuit configuration of the unit converter 105a in the bidirectional chopper circuit system will be described with reference to FIG. 2.

First, a circuit configuration of the unit converter 105a in the bidirectional chopper circuit system will be described with reference to FIG. 2. Note that FIG, 3 (the unit converter 105b) will be described in a second embodiment.

A circuit in which the high-side switching element 201H and the high-side freewheeling diode 202H are anti-parallel-connected to each other and a circuit in which the low-side switching element 201L and the low-side freewheeling diode 202L are anti-parallel-connected to each other are connected in series at a point a. The serial-connection circuit is connected in parallel to the capacitor 203.

In the specification, the high-side switching element 201H and the low-side switching element 201L, and the X-phase high-side switching element 201XH, the X-phase low-side switching element 201XL, the Y-phase high-side switching element 201YH, and the Y-phase low-side switching element 201YL illustrated later in FIG. 3 are collectively referred to simply as the switching element 201.

In FIGS. 2 and 3, a symbol of an IGBT is illustrated as the switching element 201. When a switching element is a power semiconductor device controllable to be on/off, a switching element of a type different from that of an IGBT can be used, for example, a GTO, a GCT, and a MOSFET (Metal-Oxide-Semiconductor Field Effect Transistor).

A voltage between the point a and one end (point n) of the capacitor 203 is referred to as an output voltage Vjk of the unit converter 105. Note that, j=U, V, and W, k=1, 2, ..., Nc, and Nc represents the number of the unit converters 105 included in each of the arms 104U, 104V, and 104W.

The voltage detecting means 109 detects the voltage VCjk, and transmits it to the control means 106 through the capacitor voltage detection line 110.

Based on gate signals GHjk and GLjk transmitted from the control means 106, a gate driver 205 controls ON/OFF of the high-side switching element 201H and the low-side switching element 201L.

A relationship between the output voltage Vjk of the unit converter 105 in the bidirectional chopper circuit system and an ON/OFF state of the switching elements 201H and 201L will be described below.

In the case where the high-side switching element 201H is ON and the low-side switching element 201L is OFF, the output voltage Vjk can be controlled so as to be approximately equal to the capacitor voltage VCjk regardless of the current Ij (j=U, V, and W).

In the case where the high-side switching element 201H is OFF and the low-side switching element 201L is ON, the output voltage Vjk can be controlled so as to be approximately equal to zero regardless of the current Ij.

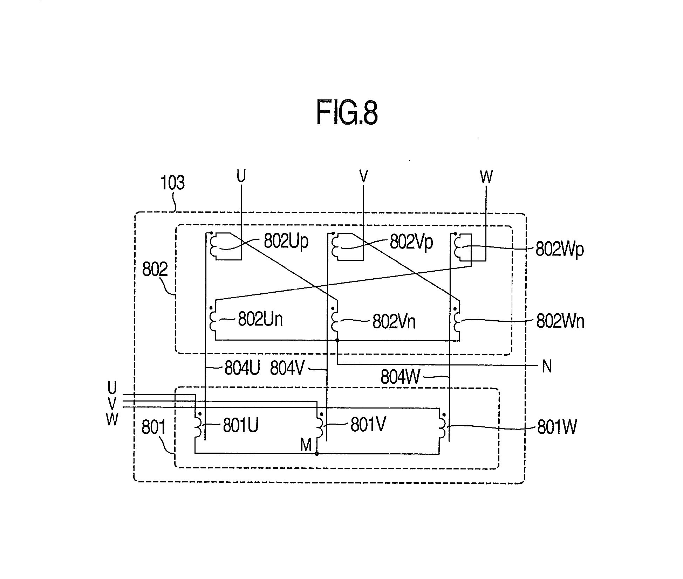

One example of an internal configuration of the transformer 103 will be described below with reference to FIG. 8.

A primary winding 801U and secondary divided windings 802Un and 802Up are wound onto a core 804U. Similarly, a primary winding 801V and secondary divided windings 802Vn and 802Vp are wound onto a core 804V Further, a primary winding 801W and secondary divided windings 802Wn and 802Wp are wound onto a core 804W.

The primary windings 801U, 801V, and 801W are star-connected at a point M. Further, the secondary divided windings 802Un, 802Vn, and 802Wn are star-connected at a point N.

Further, one ends of the respective secondary divided windings 802Up, 802Vp, and 802Wp are connected to the arms 104U, 104V, and 104W via points u, v, and w, respectively.

The other ends of the secondary divided windings 802Up, 802Vp, and 802Wp on the side opposite to the arms 104U, 104V, and 104W are connected to ends on the side opposite to the point N of the secondary divided windings 802Vn, 802Wn, and 802Un, respectively.

In other words, six secondary divided windings 802Up, 802Un, 802Vp, 802Vn, 802Wp, and 802Wn are zigzag-connected. In the present embodiment, the six secondary divided windings 802Up, 802Un, 802Vp, 802Vn, 802Wp, and 802Wn are collectively referred to simply as a secondary winding. Here, the number of windings of the secondary divided windings 802Up, 802Un, 802Vp, 802Vn, 802Wp, and 802Wn is approximately equal to each other.

FIG. 8 illustrates a case where the primary windings 801U, 801V, and 801W are star-connected. Further, the present invention can be applied also to a case where the primary windings 801U, 801V, and 801W are delta-connected, and the present embodiment is supposed to include the above case.

As a case where the secondary divided windings 802Up, 802Un, 802Vp, 802Vn, 802Wp, and 802Wn are connected, for example, FIG. 8 further illustrates a case where the secondary divided windings 802Up and 802Vn are connected. Further, the present invention can be applied also to a case where the secondary divided windings 802Up, 802Un, 802Vp, 802Vn, 802Wp, and 802Wn are zigzag-connected by using a combination of the secondary divided windings different from that of FIG. 8. The present embodiment is supposed to include the above case.

Also to a case where the secondary divided windings 802Up, 802Un, 802Vp, 802Vn, 802Wp, and 802Wn are not zigzag-connected, the present invention can be further applied also to, for example, a transformer illustrated in FIGS. 24 and 25 of Patent Literature 1 (JP-A-2010-233411), and the present embodiment is supposed to include the above case.

Further, in the specification, in the windings of the transformer 103, a winding connected to the three-phase power system 101 is referred to as the primary winding, and windings connected to the arms 104U, 104V, and 104W are referred to as the secondary divided winding. "Primary" and "Secondary" are politic appellation for explanation. Even if the appellation is opposite, the present invention can be applied.

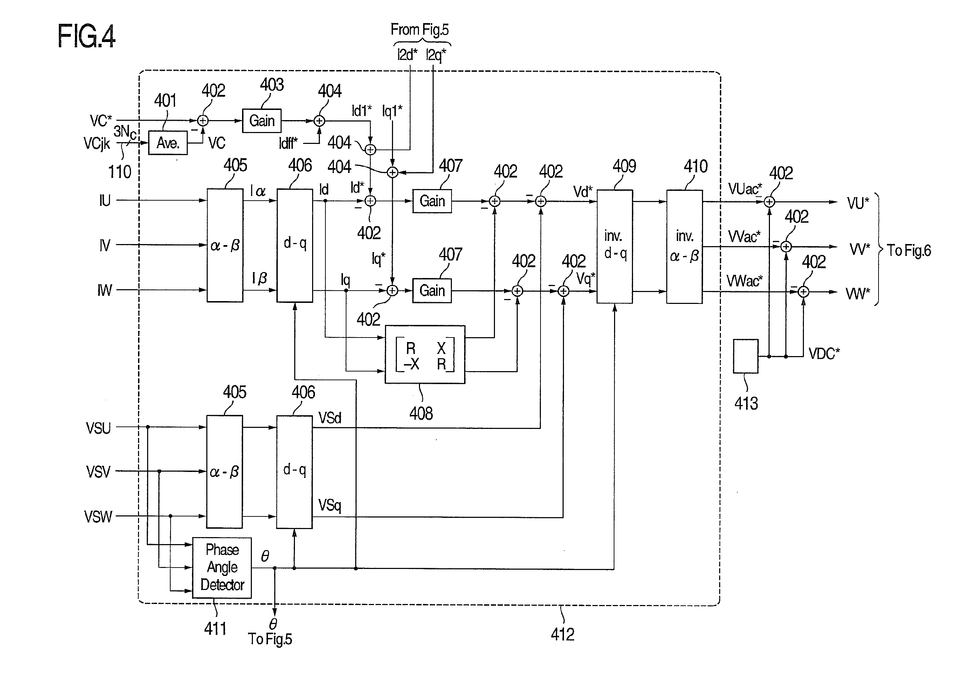

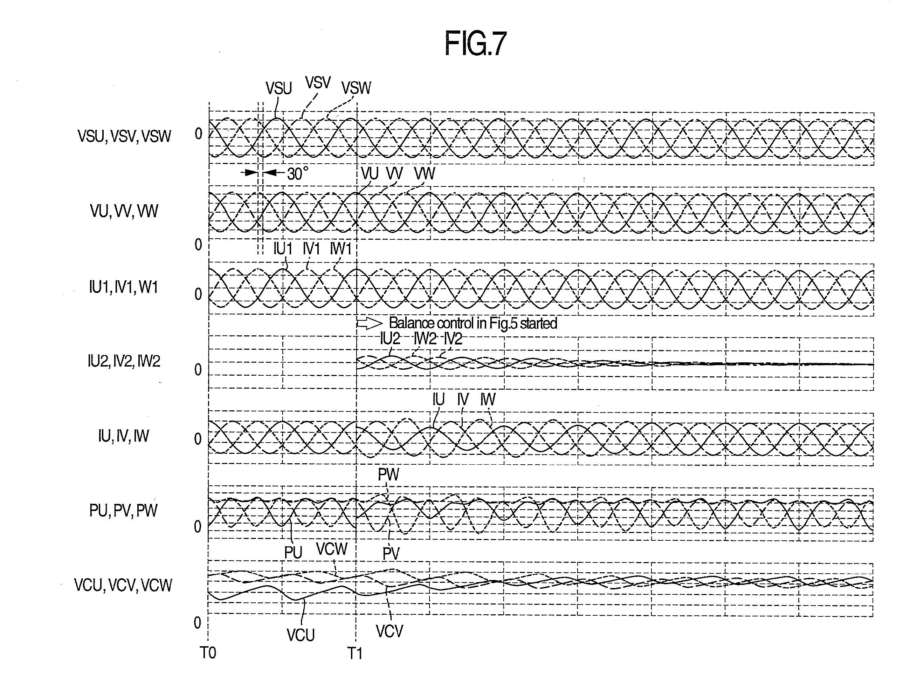

A control method performed by using the control means 106 will be described below with reference to FIGS. 4 to 6. Then, a principle in which an average value of voltages of one or a plurality of capacitors 203 included in each of the arms 104U, 104V, and 104W can be balanced among the arms will be described with reference to FIG. 7. In the present embodiment, descriptions will be made on the premise that a transformation ratio of the transformer 103 is 1:1.

FIG. 4 is a block diagram illustrating one example of the control method performed by using the control means 106. The control means 106 is configured by an AC voltage command value generating unit 412 and a DC voltage command value generating unit 413.

First, the AC voltage command value generating unit 412 will be described.

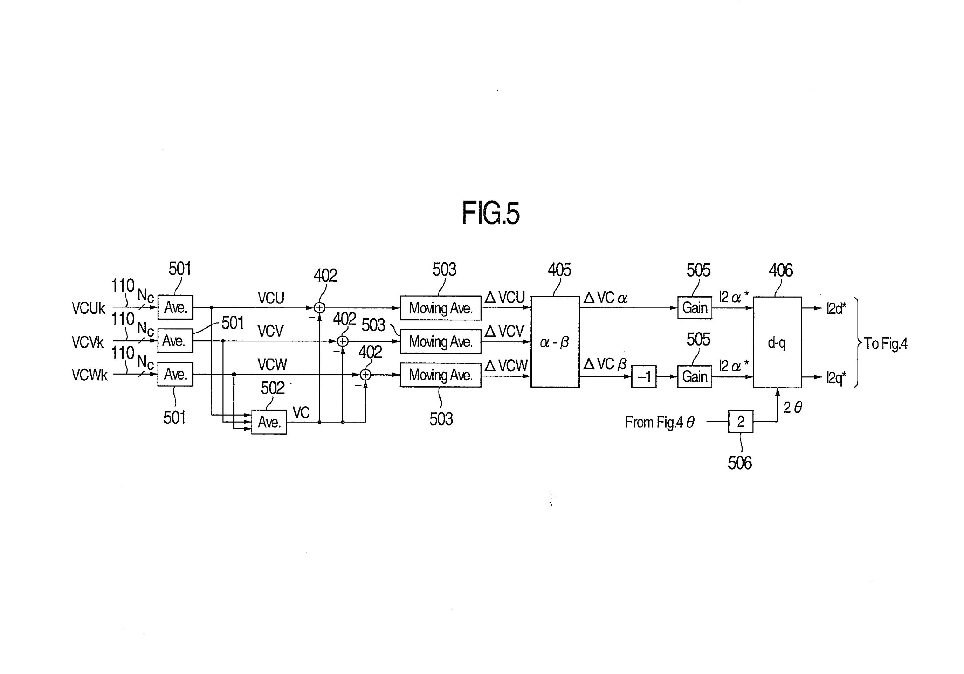

The AC voltage command value generating unit 412 calculates AC components VUac*, VVac*, and VWac* of command values VU*, VV*, and VW* of the output voltages VU, VV, and VW produced from the respective arms 104U, 104V, and 104W, based on a capacitor voltage command value VC*, the capacitor voltage VCjk of each unit converter 105 obtained through the capacitor voltage detection line 110, the currents IU, IV, and IW obtained via the current detecting means 108U, 108V, and 108W, the voltages VSU, VSV, and VSW obtained via the voltage detecting means 107, and negative phase current command values Id2* and Iq2* calculated by using an arm balance unit (FIG. 5) to be hereinafter described. Hereinafter, the AC components VUac*, VVac*, and VWac* are collectively referred to as an AC voltage command value.

The AC voltage command value generating unit 412 has at least two functions. The total average capacitor voltage control function being one function controls an average value VC (referred to as the total average capacitor voltage) of the voltages VCjk in the capacitors 203 of all the unit converters 105 so as to be approximately matched with the capacitor voltage command value VC*. In addition, a current control function being another function controls the currents IU, IV, and IW from the arms 104U, 104V, and 104W so as to be matched with the command values Id* and Iq* of Id and Iq converted on a (d-q) coordinate system.

The total average capacitor voltage control function will be described below.

Based on the capacitor voltage VCjk in each unit converter 105 obtained through the capacitor voltage detection line 110, the AC voltage command value generating unit 412 calculates the total average capacitor voltage VC by using the average value calculator 401.

The AC voltage command value generating unit 412 subtracts the obtained total average capacitor voltage VC from the capacitor voltage command value VC*, and feedback-controls it by using a gain 403. The AC voltage command value generating unit 412 adds a feed-forward item Idff* to a value produced from the gain 403 by using an adder 404 so as to obtain a positive phase d-axis current command value Id1*. Here, the feed-forward item Idff* is a d-axis current command value to feed-forward control active power to be flowed to the power conversion apparatus 102 from the three-phase power system 101.

Here, the gain 403 is a proportional gain (P), a proportional and integral gain (PI), or a proportional, integral, and derivativegain (PID).

In the description of the present embodiment, a d-axis and a q-axis are supposed to be set so that active power may flow in the power conversion apparatus 102 from the AC system 101 in the case where the d-axis current Id is positive, and so that active power may flow in the AC system 101 from the power conversion apparatus 102 in the case where the d-axis current Id is negative. Note that even if a definition method of the d-axis and the q-axis is changed, the present invention can be applied and the present embodiment is supposed to include the above case.

The d-axis current Id is controlled so as to be approximately matched with the positive phase d-axis current command value Id1* by using a current control function to be hereinafter described. In this case, the AC voltage command value generating unit 412 can control active power to flow in or out of the power conversion apparatus 102 from the three-phase power system 101 according to shortage or excess of the total average capacitor voltage VC, and the total average capacitor voltage VC to be approximately matched with the capacitor voltage command value VC*.

Next, the current control function will be described.

A ($\alpha$-$\beta$) conversion and a (d-q) conversion are performed to the currents IU, IV, and IW detected by using the current detecting means 108U, 108V, and 108W so as to obtain the d-axis current Id and the q-axis current Iq. Here, a phase angle $\theta$ for use in the (d-q) conversion is a phase angle detected by using a phase detector 411 from among the phase voltages VSU, VSV, and VSW of the three-phase power system 101 and, for example, is synchronized with a phase of the VSU. That is, the phase angle $\theta$ is synchronized with a phase at the moment of the VSU and, for example, is a signal which changes from 0 rad to $2\pi$ rad.

Based on formulae (1) and (2), a d-axis voltage command value Vd* and a q-axis voltage command value Vq* given to the power conversion apparatus 102 are calculated so that the d-axis current detection value Id may be matched with the d-axis current command value Id* and so that the q-axis current detection value Iq may be matched with the q-axis current command value Iq*.

[MATH. 1]

$$Vd*=VSd-Gain(Id*-Id)-R{\cdot}Id-X{\cdot}Iq \qquad \ldots (1)$$

[MATH. 2]

$$Vq*=VSq-Gain(Iq*-Iq)+X{\cdot}Id-R{\cdot}Iq \qquad \ldots (2)$$

Here, VSd and VSq in the formulae (1) and (2) are a system d-axis voltage and a system q-axis voltage of the three-phase power system obtained by performing the ($\alpha$-$\beta$) conversion and the (d-q) conversion to the voltages VSU, VSV, and VSW of the three-phase power system 101, respectively. Further, the d-axis current command value Id* and the q-axis current command value Iq* are obtained by using formulae (5) and (6) to be hereinafter described.

Further, the gain 407 (Gain in the formulae (1) and (2)) is a proportional gain (P), a proportional and integral gain (PI), or a proportional, integral, and derivative gain (PID).

Preferably, R in the formulae (1) and (2) is set as a winding resistance of the transformer 103, and X therein is set as a leakage reactance of the transformer 103.

Further, the AC voltage command value generating unit 412 performs an inverse (d-q) conversion and an inverse ($\alpha$-$\beta$) conversion to Vd* and Vq* obtained by using the formulae (1) and (2) so as to calculate the AC voltage command values VUac*, VVac*, and Vac*.

The DC voltage command value generating unit 413 generates a DC voltage command value VDC*.

Further, arm voltage command values VU*, VV*, and VW* are calculated by using formulae (3) to (5).

[MATH. 3]

$$VU*=VUac*+VDC* \qquad \ldots (3)$$

[MATH. 4]

$$VV*=VVac*+VDC* \qquad \ldots (4)$$

[MATH. 5]

$$VW*=VWac*+VDC* \qquad \ldots (5)$$

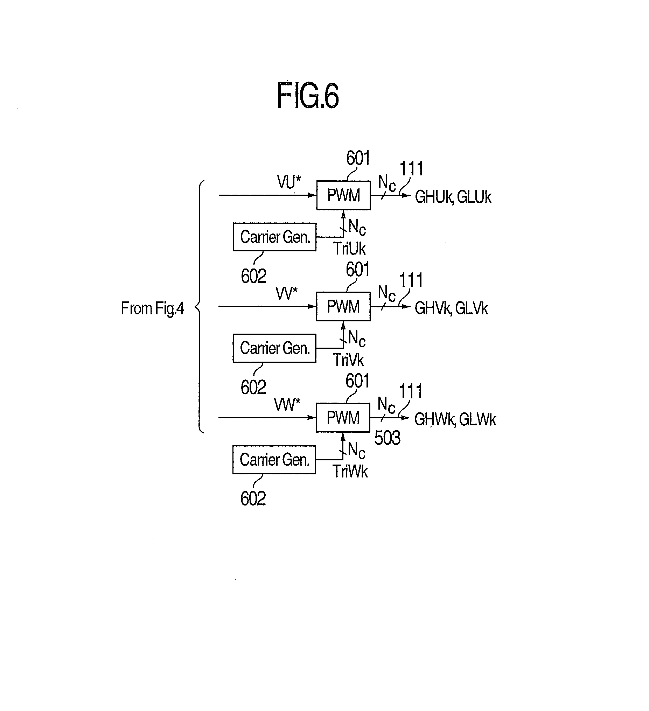

Based on the arm voltage command values VU*, VV*, and VW*, a gate signal given to each unit converter 105 is calculated by using a gate signal generating unit (FIG. 6) to be hereinafter described.

An arm balance unit which is characteristic in the present invention will be described below with reference to FIG. 5. Then, a principle in which an average value of voltages of one or a plurality of unit converters 105 included in the respective arms 104U, 104V, and 104W can be balanced among the arms will be described with reference to FIG. 7.

In FIG. 5, the arm balance unit calculates the negative phase current command values $Id2^*$ and $Iq2^*$ on the (d-q) coordinate system based on capacitor voltages $VCUk$, $VCVk$, and $VCWk$ of each phase obtained through the capacitor voltage detection line 110 and the phase angle $\theta$ detected by using the phase detector 411. A calculation method to be described below is one example of the calculation method for obtaining the $Id2^*$ and $Iq2^*$. As the calculation method for obtaining the $Id2^*$ and the $Iq2^*$ of securing a balance among the arms of the capacitor voltage $VCjk$, other calculation methods mathematically equivalent to the following description are used, and the present embodiment is supposed to include the above methods.

First, an average value $VCU$ of the capacitor voltage $VCUk$ of each unit converter 105 included in the U-phase arm 104U is calculated by using an average value calculator 501. Similarly, an average value $VCV$ of the capacitor voltage $VCVk$ of each unit converter 105 included in the V-phase arm 104V is calculated by using the average value calculator 501. Further, an average value $VCW$ of the capacitor voltage $VCWk$ of each unit converter 105 included in the W-phase arm 104W is calculated by using the average value calculator 501.

Next, an average value $VC=(VCU+VCV+VCW)/3$ of the $VCU$, $VCV$, and $VCW$ is calculated by using an average value calculator 502. Further, $VCU-VC$, $VCV-VC$, and $VCW-VW$ are calculated by using a subtracter 402.

A moving average during a duration of one period or integer periods of the three-phase power system 101 is calculated to the obtained $VCU-VC$, $VCV-VC$, and $VCW-VW$ by using a moving average calculator 405 so as to obtain $\Delta VCU$, $\Delta VCV$, and $\Delta VCW$. In addition, a low-pass filter can be used in place of the moving average and the present embodiment is supposed to include the above case.

Note that a $(\alpha\text{-}\beta)$ converter of FIG. 5 can double as functions of the average value calculator 502 and the subtracter 402 of FIG. 5. Therefore, the average value calculator 502 and the subtracter 402 of FIG. 5 are not necessarily provided.

Further, the $(\alpha\text{-}\beta)$ conversion is performed to the obtained $\Delta VCU$, $\Delta VCV$, and $\Delta VCW$ so as to obtain $\Delta VC\alpha$ and $\Delta VC\beta$. Further, negative phase current command values $I2\alpha^*$ and $I2\beta^*$ on the $(\alpha\text{-}\beta)$ coordinate system are calculated based on formulae (6) and (7).

[MATH. 6]

$$I2\alpha^* = Gain \times \Delta VC\alpha \qquad \ldots (6)$$

[MATH. 7]

$$I2\beta^* = \text{-}Gain \times \Delta VC\beta \qquad \ldots (7)$$

By using the phase angle $2\theta$, the (d-q) conversion is performed to the $I2\alpha^*$ and the $I2\beta^*$ obtained by using the formulae (3) and (4) so as to obtain the negative phase current command values $Id2^*$ and $Iq2^*$ on the (d-q) coordinate system. The (d-q) conversion is performed by using the phase angle $2\theta$ being twice the phase angle $\theta$ of the VSU detected by using the phase detector 411, thereby being equivalent to the (d-q) conversion at a double frequency. Accordingly, the $I2d^*$ and the $I2q^*$ mean negative phase components in the three phase coordinate system.

As illustrated in FIG. 4 and formulae (8) and (9), a d-axis current command value $Id^*$ is calculated as the sum of the positive phase d-axis current command value $Id1^*$ and the negative phase d-axis current command value $Id2^*$ obtained in FIG. 5. Further, a q-axis current command value $Iq^*$ is calculated as the sum of the positive phase q-axis current command value $Iq1^*$ and the negative phase q-axis current command value $Iq2^*$ obtained in FIG. 5.

[MATH. 8]

$$Id^* = Id1^* + Id2^* \qquad \ldots (8)$$

[MATH. 9]

$$Iq^* = Iq1^* + Iq2^* \qquad \ldots (9)$$

Based on the formulae (8) and (9), the d-axis current command value Id* and the q-axis current command value Iq* include a positive phase component and a negative phase component. The above-described current control function feedback-controls so as to match actual Id and Iq with Id* and Iq* as much as possible, respectively.

According to the control method of the present embodiment, a zero-phase component is not included in a signal produced from an inverse (α-β) converter 410. Therefore, the command value VDC* being a signal produced from the DC voltage command value generating unit 413 does not interfere with the command values Vuac*, Vvac*, and Vwac* being signals produced from the current control function including the command values Id2* and Iq2* for use in arm balance control. Accordingly, in the arm balance control, variation does not occur at the voltage VDC between the point P and the point N. Accordingly, the average values VCU, VCV, and VCW can be balanced without interfering with control of the other-side power conversion apparatus 112.

In the above description, a case where the current control function of FIG. 4 is performed on the (d-q) coordinate system is described. When a positive phase component and a negative phase component of the arm currents IU, IV, and IW can be controlled, the present invention can be applied even if other systems, for example, a method for individually controlling currents in three phases is used.

A method for calculating a gate signal given to each unit converter 105 based on the arm voltage command values VU*, VV*, and VW* will be described below with reference to FIG. 6. Here, as an example, FIG. 6 illustrates a case of using a triangular wave comparison carrier system PWM (Pulse Width Modulation) for comparing a triangular wave carrier and a voltage command value. When there is used a system in which the arm voltage command values VU*, VV*, and VW* and actual arm voltages VU, VV, and VW are controlled so as to be matched with each other as much as possible, the above method is not limited to the triangular wave comparison carrier system PWM Other modulation system such as a space vector modulation can be applied and the present embodiment is supposed to include the above case.

Gate signals GHUk and GLUk given to each unit converter 105 of the U-phase arm 104U are calculated based on the U-phase arm voltage command value VU* and a triangular wave carrier TriUk (k=1, 2, ..., Nc) corresponding to each unit converter 105 of the U-phase arm 104U. Here, the triangular wave carrier TriUk is a signal generated by a carrier generating unit 602.

Further, gate signals GHVk and GLVk given to each unit converter 105 of the V-phase arm 104V are calculated based on the V-phase arm voltage command value VV* and a triangular wave carrier TriVk (k=1, 2, ..., Nc) corresponding to each unit converter 105 of the V-phase arm 104V Here, the triangular wave carrier TriVk is a signal generated by the carrier generating unit 602.

In addition, gate signals GHWk and GLWk given to each unit converter 105 of the W-phase arm 104W are calculated based on the W-phase arm voltage command value VW* and a triangular wave carrier TriWk (k=1, 2, ..., Nc) corresponding to each unit converter 105 of the W-phase arm 104W. Here, the triangular wave carrier TriWk is a signal generated by the carrier generating unit 602.

The control means 106 transmits the obtained gate signals GHUk, GLUk, GHVk, GLVk, GHWk, and GLWk to the gate driver 205 of each unit converter through the gate signal transmission lines 111.

A principle in which the average values VCU, VCV, and VCW can be balanced by using a control method of the arm balance unit illustrated in FIG. 5 will be described below with reference to FIG, 7.

FIG. 7 illustrates conceptual waveforms of phase voltages VSU, VSV, and VSW of the three-phase power system 101, the arm voltages VU, VV and VW, positive-phase-sequence components IU1, IV1, and IW1 of the arm currents IU, IV, and IW, negative-phase-sequence components IU2, IV2, and IW2 of the same arm currents IU, IV, and IW, the arm currents IU, IV, and IW, power PU, PV, and PW in the respective arms 104U, 104V, and 104W, and capacitor voltage average values VCU, VCV, and VCW in the respective arms 104U, 104V, and 104W.

Note that IU=IU1+IU2, IV=IV1+IV2, and IW=IW1+IW2 hold.

Here, a unit of each waveform in the vertical axis of FIG. 7 is arbitrary. Further, one scale in the horizontal axis is equal to one period of the power source of the three-phase power system 101.

Here, through a wire connection of the transformer 103 illustrated in FIG. 8, the phase voltages VSU, VSV, and VSW advance by about 30□ as compared to AC components of the arm voltages VU, VV, and VW

Further, in power of the respective arms 104U, 104V, and 104W, PU=VU×IU, PV=VV×IV, and PW=VW×IW hold. Based on a definition of a direction in the voltages VU, VV, and VW and the currents IU, IV, and IW of FIG. 1, the direction to which power PU, PV, and PW are produced from the respective arms 104U, 104V, and 104W is positive.

For explaining effects of the present invention in a simplified manner, FIG. 7 illustrates a state in which an imbalance occurs in the average values VCU, VCV, and VCW at the time T0. Note that the arm balance control illustrated in FIG. 5 is not operated at this moment.

When the arm balance control of FIG. 5 is operated at the time T1, the current control function of the AC voltage command value generating unit 412 controls the negative-phase-sequence components IU2, IV2, and IW2 of the arm currents IU, IV, and IW to flow through each arm.

At the time T1 of FIG. 7, the capacitor voltage average value VCU in the arm of the U-phase arm 104U is lower than the VCV and the VCW.

Under the above conditions, a calculation of FIG. 5 and the current control function of FIG. 4 permit an AC component of the VU and the negative-phase-sequence current IU2 of a negative phase to flow to the U-phase arm 104.

As a result, the power PU, PV, and PW can be made to be unbalanced intentionally. The process permits energy to flow into the U-phase arm 104U from the V-phase arm 104V and the W-phase arm 104W.

Energy flowing in and out is charged and discharged in capacitors of the unit converters 105 included in the respective arms 104U, 104V, and 104W. As a result, the capacitor voltage average values VCU, VCV, and VCW can be balanced.

As described above, when a negative-phase-sequence component of an arm current is controlled, an effect in which the capacitor voltage average values VCU, VCV, and VCW in the respective arms 104U, 104V, and 104W can be balanced is obtained.

That is, a current which flows through each arm is controlled to have amplitude and a phase different from each other so as to be balanced.

In the above description, a method for balancing the capacitor voltage average values VCU, VCV, and VCW in the respective arms 104U, 104V, and 104W is described. An average value of electrostatic energy in capacitors of the respective arms 104U, 104V, and 104W can be controlled so as to be balanced in place of the capacitor voltage average values VCU, VCV, and VCW. In this case, it suffices that when electrostatic energy of each capacitor 203 is equal to C, electrostatic energy $WCjk=C \times VCjk2/2$ is calculated based on the voltage VCjk of each capacitor 203, and further calculations of FIGS. 4 and 5 are performed by using the WCjk in place of the VCjk.

[Second Embodiment]

A second embodiment of the present invention will be described.

In the first embodiment, the unit converter 105a (FIG. 2) in the bidirectional chopper circuit system is used in each of the arms 104U, 104V, and 104W The present embodiment has a configuration in which a part or all of unit converters 105 are replaced by the unit converters 105b (FIG. 3) in the full-bridge circuit system illustrated in FIG. 3.

According to the present embodiment, in addition to the effects to be obtained in the first embodiment, an effect in which a voltage VDC between a DC positive side terminal (point P) and a DC negative side terminal (point N) can be controlled so as to be positive, zero, or negative is obtained.

Only points in which the present embodiment differs from the first embodiment will be described below.

First, an internal configuration of the unit converter 105b in the full-bridge circuit system will be described with reference to FIG. 3.

A main circuit of the unit converter 105b in the full-bridge circuit system has a configuration in which a circuit in which an anti-parallel connection circuit including the X-phase high-side switching element 201XH and the X-phase high-side freewheeling diode 202XH and another anti-parallel connection circuit including the X-phase low-side switching element 201XL and the X-phase low-side freewheeling diode 202XL are connected in series, another circuit in which an anti-parallel connection circuit including the Y-phase high-side switching element 201YH and the Y-phase high-side freewheeling diode 202YH and another anti-parallel connection circuit including the Y-phase low-side switching element 201YL and the Y-phase low-side freewheeling diode 202YL are connected in series, and the capacitor 301 are connected in parallel.

Here, a series connection point between the anti-parallel connection circuit including the X-phase high-side switching element 201XH and the X-phase high-side freewheeling diode 202XH and the another anti-parallel connection circuit including the X-phase low-side switching element 201XL and the X-phase low-side freewheeling diode 202XL is referred to as a point X.

Further, a series connection point between the anti-parallel connection circuit including the Y-phase high-side switching element 201YH and the Y-phase high-side freewheeling diode 202YH and the another anti-parallel connection circuit including the Y-phase low-side switching element 201YL and the Y-phase low-side freewheeling diode 202YL is referred to as a point Y

A voltage Vjk between the point X and the point Y is referred to as an output voltage of the unit converter 105b in the full-bridge circuit system.

The unit converter 105b in the full-bridge circuit system includes the voltage detecting means 109 for detecting the capacitor voltage VCjk (j=U, V, and W, and k=1, 2, ..., Nc), and is connected to the control means 106 through the capacitor voltage detection line 110.

In addition, the unit converter 105b in the full-bridge circuit system includes a gate driver 302 which applies a gate voltage between a gate and an emitter of each of the switching elements 201XH, 201XL, 201YH, and 201YL based on the gate signals GXHjk, GXLjk, GYHjk, and GYLjk transmitted from the control means 106 through the gate signal line 111.

A relationship between the output voltage Vjk of the unit converter 105b in the full-bridge circuit system and an ON/OFF state of the switching elements 201XH, 201XL, 201YH, and 201YL will be described below.

In the case where the X-phase high-side switching element 201XH is ON, the X-phase low-side switching element 201XL is OFF, the Y-phase high-side switching element 201YH is ON, and the Y-phase low-side switching element 201YL is OFF, the output voltage Vjk can be controlled so as to be approximately equal to zero regardless of the current Ij.

In the case where the X-phase high-side switching element 201XH is ON, the X-phase low-side switching element 201XL is OFF, the Y-phase high-side switching element 201YH is OFF, and the Y-phase low-side switching element 201YL is ON, the output voltage Vjk can be controlled so as to be approximately equal to the capacitor voltage VCjk regardless of the current Ij.

In the case where the X-phase high-side switching element 201XH is OFF, the X-phase low-side switching element 201XL is ON, the Y-phase high-side switching element 201YH is ON, and the Y-phase low-side switching element 201YL is OFF, the output voltage Vjk can be controlled so as to be approximately equal to a voltage -VCjk having a polarity opposite to that of the capacitor voltage VCjk regardless of the current Ij.

In the case where the X-phase high-side switching element 201XH is OFF, the X-phase low-side switching element 201XL is ON, the Y-phase high-side switching element 201YH is OFF, and the Y-phase low-side switching element 201YL is ON, the output voltage Vjk can be controlled so as to be approximately equal to zero regardless of the current Ij.

The unit converter 105b in the full-bridge circuit system generates the gate signals GXHjk, GXLjk, GYHjk, and GYLjk corresponding to the above-described switching elements 201XH, 201XL, 201YH, and 201YL. For this purpose, in the present embodiment, in the case where the corresponding unit converter 105 is the unit converter 105b in the full-bridge circuit system, the triangular wave comparison PWM pulse generator 601 illustrated in FIG. 6 supplies the gate signals GXHjk, GXLjk, GYHjk, and GYLjk in place of the gate signals GHUk, GLUk, GHVk, GLVk, GHWK, and GLWk.

The unit converter 105b in the full-bridge circuit system supplies a negative voltage, namely, -VCjk as described above. Therefore, when the VDC* produced from the DC voltage command value generating unit 413 illustrated in FIG. 4 is set to be zero or negative, an effect in which an actual value of the VDC can be controlled so as to be zero or negative is obtained.

[Third Embodiment]

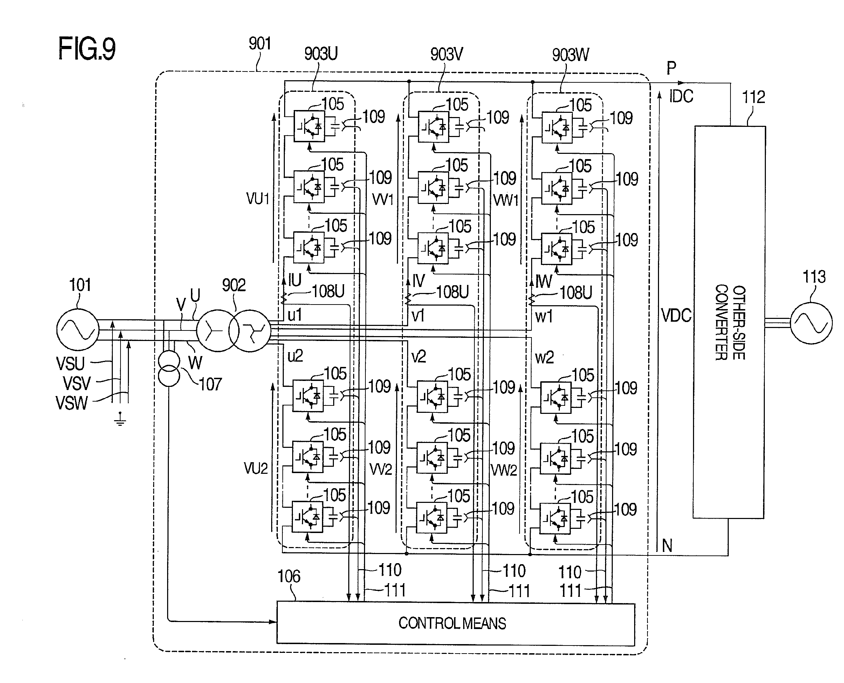

A third embodiment of the present invention will be described with reference to FIG. 9.

The present embodiment differs from the first and second embodiments in that a transformer 901 in which an open winding is used as the secondary winding is used in place of the transformer 103 and in that the arms 104U, 104V, and 104W are divided so as to be arms 903U, 903V, and 903W.

In the present embodiment, an effect that a potential of a transformer can be freely changed is obtained in addition to the same effects as those of the first and second embodiments.

Points in which the present embodiment differs from the first and second embodiments will be described below.

The secondary winding of a transformer 902 is an open winding, and the transformer 902 includes at least six terminals at points u1, u2, v1, v2, w1, and w2. An internal configuration of the transformer 902 will be described later.

One part of the U-phase arm 903U is connected to a DC positive side terminal (point P) at the point u1. An output voltage of this part of the U-phase arm 903U is supposed to be VU1.

Further, another part of the U-phase arm 903U is connected to a DC negative side terminal (point N) at the point u2. An output voltage of this part of the U-phase arm 903U is supposed to be VU2.

Similarly, one part of the V-phase arm 903V is connected to the DC positive side terminal (point P) at the point v1. An output voltage of this part of the V-phase arm 903V is supposed to be VV1.

In addition, another part of the V-phase arm 903V is connected to the DC negative side terminal (point N) at the point V2. An output voltage of this part of the V-phase arm 903V is supposed to be VV2.

Further, one part of the W-phase arm 903W is connected to the DC positive side terminal (point P) at the point w1. An output voltage of this part of the W-phase arm 903 W is supposed to be VW1.

In addition, another part of the W-phase arm 903W is connected to the DC negative side terminal (point N) at the point w2. An output voltage of this part of the W-phase arm 903W is supposed to be VW2.

The present embodiment differs from the first and second embodiments in that the secondary winding (802) of the transformer is inserted into each of the arms 903U, 903V, and 903W on the way. Also in the present embodiment, circuits in which the secondary winding (802) of the transformer and each of the arms 901U, 901V and 901W are connected in series are connected in parallel at the points P and N.

Here, when VU=VU1+VU2 holds in the U-phase arm 903U, the power conversion apparatus of the present embodiment can be controlled similarly to those of the first and second embodiments by using the control method illustrated in FIGS. 4 to 6.

Amplitude of the VU1 and that of the VU2 may be equivalent or different. When a ratio of the amplitude of the VU1 and that of the VU2 are changed, a DC component at potential of the U-phase secondary windings (802Up and 802Vn) of the transformer 103 can be changed between potential at the point P and that at the point N. That is, an effect that a DC component at potential of the U-phase secondary windings (802Up and 802Vn) can be freely changed is obtained.

Similarly, when VV=VV1+VV2 holds in the V-phase arm 903V, the power conversion apparatus of the present embodiment can be controlled similarly to those of the first and second embodiments by using the control method illustrated in FIGS. 4 to 6.

Amplitude of the VV1 and that of the VV2 may be equivalent or different. When a ratio of the amplitude of the VV1 and that of the VV2 are changed, a DC component at potential of the V-phase secondary windings (802Vp and 802Wn) of the transformer 103 can be changed between potential at the point P and that at the point N. That is, an effect that a DC component at potential of the V-phase secondary windings (802Vp and 802Wn) can be freely changed is obtained.

Further, when VW=VW1+VW2 holds in the W-phase arm 903W, the power conversion apparatus of the present embodiment can be controlled similarly to those of the first and second embodiments by using the control method illustrated in FIGS. 4 to 6.

Amplitude of the VW1 and that of the VW2 may be equivalent or different. When a ratio of the amplitude of the VW1 and that of the VW2 are changed, a DC component at potential of the W-phase secondary windings (802Wp and 802Un) of the transformer 103 can be changed between potential at the point P and that at the point N. That is, an effect that a DC component at potential of the W-phase secondary windings (802Wp and 802Un) can be freely changed is obtained.

Further, in the same manner as in the first embodiment, the unit converter 105 can be changed into the unit converter 105a in the bidirectional chopper circuit system. In this case, the same effect as that of the first embodiment is obtained.

In addition, in the same manner as in the second embodiment, the unit converter 105 can be formed into the arms 903U, 903V, and 903W in which the unit converter 105a in the bidirectional chopper circuit system and the unit converter 105b in the full-bridge circuit system are mixedly used. In this case, the same effect as that of the second embodiment is obtained.

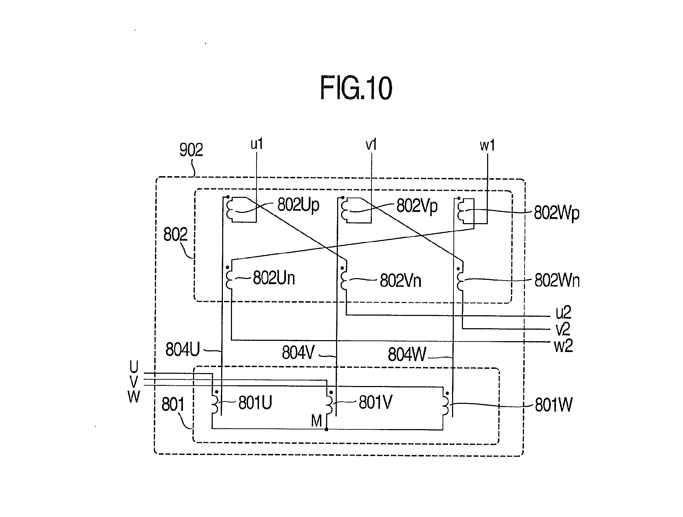

One example of an internal configuration of the transformer 902 will be described below with reference to FIG. 10.

The primary winding 801U and the secondary divided windings 802Un and 802Up are wound onto the core 804U. Similarly, the primary winding 801V and the secondary divided windings 802Vn and 802Vp are wound onto the core 804V Further, the primary winding 801W and the secondary divided windings 802Wn and 802Wp are wound onto the core 804W.

The primary windings 801U, 801V, and 801W are star-connected at the point M.

One ends of the secondary divided windings 802Up, 802Vp, and 802Wp are connected to portions near to the point P of the arms 901U, 901V and 901W via the points u1, v1, and w1, respectively.

Further, one ends of the secondary divided windings 802Un, 802Vn, and 802Wn are connected to portions near to the point N of the arms 901U, 901V, and 901W via the points w2, u2, and v2, respectively.

The other ends of the secondary divided windings 802Up, 802Vp, and 802Wp on the side opposite to the arms 903U, 903V, and 903W are connected to ends of the secondary divided windings 802Vn, 802Wn, and 802Un on the side opposite to the arms 903U, 903V, and 903W, respectively.

In other words, six secondary divided windings 802Up, 802Un, 802Vp, 802Vn, 802Wp, and 802Wn are open-zigzag-connected. In the present embodiment, the six secondary divided windings 802Up, 802Un, 802Vp, 802Vn, 802Wp, and 802Wn are collectively referred to simply as a secondary winding. Here, the number of windings of the secondary divided windings 802Up, 802Un, 802Vp, 802Vn, 802Wp, and 802Wn is approximately equal to each other.

FIG. 10 illustrates a case where the primary windings 801U, 801V, and 801W are star-connected. Further, the present invention can be applied also to a case where the primary windings 801U, 801V and 801W are delta-connected, and the present embodiment is supposed to include the above case.

As a case where the secondary divided windings 802Up, 802Un, 802Vp, 802Vn, 802Wp, and 802Wn are connected, for example, FIG. 10 further illustrates a case where the secondary divided windings 802Up and 802Vn are connected. Further, the present invention can be applied also to a case where the secondary divided windings 802Up, 802Un, 802Vp, 802Vn, 802Wp, and 802Wn are zigzag-connected by using a combination of the secondary divided windings different from that of FIG. 7. The present embodiment is supposed to include the above case.

Further, in the specification, among windings of the transformer 103, a winding connected to the three-phase power system 101 is referred to as the primary winding, and windings connected to the arms 104U, 104V, and 104W are referred to as the secondary divided winding. "Primary" and "Secondary" are politic appellation for explanation. Even if the appellation is opposite, the present invention can be applied.

Here, an example where a secondary divided winding of a transformer is connected in series to an arm is described. Similarly, the present invention can be applied to the power conversion apparatus in which an arm is configured by two arms of an upper arm and a lower arm, an AC terminal is provided between the upper arm and the lower arm, and a secondary divided winding of a transformer is connected to this AC terminal.

It should be further understood by those skilled in the art that although the foregoing description has been made on embodiments of the invention, the invention is not limited thereto and various changes and modifications may be made without departing from the spirit of the invention and the scope of the appended claims.

**Claims**

1. A power conversion apparatus (102) comprising:

   unit converters being configured as an at least two-terminal converter (105);
   arms (104U, 104V, 104W) configured by connecting one or a plurality of unit converters in series;
   a serial circuit configured by connecting the arms (104U, 104V, 104W) and windings on a predetermined order side of a transformer (103) in series;
   DC terminals as connection parts when connecting the serial circuits in parallel; and
   a plurality of phase power sources or phase loads connected to the winding on another order side of the transformer (103);
   wherein the unit convertor has at least one energy storage element and at least one switching element controlling an output depending on a voltage of the energy storage element;
   wherein the power conversion apparatus (102) controls imbalance of storage energy or voltage of the energy storage element so that a current flowing through each of the arms (104U, 104V, 104W) has a phase and amplitude different from each other to be approximated to balance.

2. The power conversion apparatus (102) according to claim 1, wherein the unit converter (105) is a bidirectional chopper circuit or a full-bridge circuit including a capacitor as an energy storage element.

3. The power conversion apparatus (102) according to claim 1, wherein a bidirectional chopper circuit and a full-bridge circuit having a capacitor as an energy storage element are mixedly used in the arms (104U, 104V, 104W).

4. The power conversion apparatus (102) according to claim 1, wherein the plurality of phase power sources are set as a power system.

5. The power conversion apparatus (102) according to claim 1, wherein to an arm (104U, 104V, 104W) in which an average value in the arm (104U, 104V, 104W) of a voltage or energy of the energy storage element is short or excessive, average power formed by a current flowing through the arm (104U, 104V, 104W) and an output voltage of the arm (104U, 104V, 104W) is a direction of flowing in or out of the arm (104U, 104V, 104W).

6. The power conversion apparatus (102) according to claim 1, wherein the power conversion apparatus (102) controls a positive-phase-sequence current and a negative-phase-sequence current flowing through the arms (104U, 104V, 104W).

7. The power conversion apparatus (102) according to claim 1, wherein when a negative-phase-sequence current is controlled on a (d-q) axis and a command value of the negative-phase-sequence current is set as Id2* and Iq2*, the power conversion apparatus (102) calculates an average value in each of the plurality of arms (104U, 104V, 104W) of a voltage or energy of the energy storage element and a difference of the plurality of average values of voltages or energy of all the energy storage elements, performs a moving average or a low-pass filter to the obtained difference, performs a ($\alpha$-$\beta$) conversion, multiplies a signal obtained by inverting polarities of the obtained $\alpha$-axis component and $\beta$-axis component by a gain, and performs an inverse (d-q) conversion so as to obtain the Id2* and the Iq2*.

8. The power conversion apparatus (102) according to claim 1, wherein upon configuring a series circuit of a transformer winding and an arm (104U, 104V, 104W) configured by connecting one or a plurality of the unit converters (105) in series, the transformer winding is connected in series so as to be interposed between the one or a plurality of the unit converters (105).

9. A power conversion apparatus (102) comprising:

a plurality of arms (104U, 104V, 104W) connected in parallel; and
a winding on a predetermined order side of a transformer (103);
wherein some arms of a plurality of the parallel-connection arms (104U, 104V, 104W) are formed as a first DC side mutually connected;
wherein other arms of a plurality of the parallel-connection arms (104U, 104V, 104W) are formed as a second DC side mutually connected;
wherein each of the plurality of arms (104U, 104V, 104W) is connected to one or a plurality of unit converters (105) in series;
wherein the unit converter (105) has at least one energy storage element and at least one switching element for outputting a voltage depending on a voltage of the energy storage element;
wherein the winding on a predetermined order side of a transformer (103) is a winding provided between the first DC side and the second DC side or a winding connected to a terminal provided between the first DC side and the second DC side;
wherein the winding on a predetermined order side of a transformer (103) is electrically connected to a winding on another order side; and
wherein the power conversion apparatus (102) controls a current flowing through each of the arms (104U, 104V, 104W) to have a phase and amplitude different from each other and approximate imbalance of a voltage or storage energy of the energy storage element to balance.

10. A method for controlling a power conversion apparatus (102); the power conversion apparatus (102) comprising: a plurality of arms (104U, 104V, 104W) connected in parallel; and a winding on a predetermined order side of a transformer (103); wherein some arms of a plurality of the parallel-connection arms (104U, 104V, 104W) are formed as a first DC side mutually connected; wherein other arms of a plurality of the parallel-connection arms (104U, 104V, 104W) are formed as a second DC side mutually connected; wherein each of the plurality of arms (104U, 104V, 104W) is connected to one or a plurality of unit converters (105) in series; wherein the unit converter (105) has at least one energy storage element and at least one switching element for outputting a voltage depending on a voltage of the energy storage element; wherein the winding on a predetermined order side of a transformer (103) is a winding provided between the first DC side and the second DC side or a winding connected to a terminal provided between the first DC side and the second DC side; and wherein the winding on a predetermined order side of a transformer (103) is electrically connected to a winding on another order side, the method comprising the steps of:

calculating a command value to control a current flowing through each of the arms (104U, 104V, 104W) to have a phase and amplitude different from each other and approximate imbalance of storage energy or a voltage of the energy storage element to balance;
and
controlling a current flowing through each of the arms (104U, 104V, 104W) based on the command value.

# FIG.1

EP 2 728 722 A2

# FIG.2

# FIG.3

# FIG.4

EP 2 728 722 A2

# FIG.5

# FIG.6

From Fig.4 {

VU* → PWM (601) → $N_C$ 111 → GHUk, GLUk

Carrier Gen. (602) → $N_C$ TriUk

VV* → PWM (601) → $N_C$ 111 → GHVk, GLVk

Carrier Gen. (602) → $N_C$ TriVk

VW* → PWM (601) → $N_C$ 111 → GHWk, GLWk
503

Carrier Gen. (602) → $N_C$ TriWk

FIG.7

# FIG.8

FIG.9

## FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2010233411 A